(19) Europäisches Patentamt
European Patent Office
Office européen des brevets

(11) EP 2 912 475 B1

(12) **FASCICULE DE BREVET EUROPEEN**

(45) Date de publication et mention de la délivrance du brevet:
**07.09.2016 Bulletin 2016/36**

(21) Numéro de dépôt: **13779888.0**

(22) Date de dépôt: **23.10.2013**

(51) Int Cl.:
***G01P 5/00*** (2006.01) ***G01P 5/26*** (2006.01)
***G03H 1/00*** (2006.01) ***G06T 3/00*** (2006.01)

(86) Numéro de dépôt international:
**PCT/EP2013/072186**

(87) Numéro de publication internationale:
**WO 2014/064159 (01.05.2014 Gazette 2014/18)**

(54) **PROCEDE DE DETECTION DE CONDITIONS DE TURBULENCE UTILISANT L'INTERACTION D'UN FAISCEAU LASER AVEC UN FILM MINCE PHOTOCHROMIQUE ET DISPOSITIF METTANT EN OEUVRE LEDIT PROCEDE**

VERFAHREN ZUR ERKENNUNG VON TURBULENZEN MITHILFE DER INTERAKTION EINES LASERSTRAHLS MIT EINER DÜNNEN FOTOCHROMEN FOLIE UND VORRICHTUNG ZUR DURCHFÜHRUNG DES VERFAHRENS

METHOD FOR DETECTING TURBULENCE CONDITIONS, USING THE INTERACTION OF A LASER BEAM WITH A THIN PHOTOCHROMIC FILM, AND DEVICE FOR IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2012 FR 1260113**

(43) Date de publication de la demande:
**02.09.2015 Bulletin 2015/36**

(73) Titulaires:
- **Centre National de la Recherche Scientifique 75016 Paris (FR)**
- **Université d'Angers 49100 Angers (FR)**
- **Wroclaw University of Technology 50-370 Wroclaw (PL)**

(72) Inventeur: **BARILLE, Régis F-49100 Angers (FR)**

(74) Mandataire: **Esselin, Sophie et al
Marks & Clerk France
Conseils en Propriété Industrielle
Immeuble Visium
22 Avenue Aristide Briand
94117 Arcueil Cedex (FR)**

(56) Documents cités:
**US-B1- 7 268 937**

- **CONSORTINI A ET AL: "Measuring inner scale of atmospheric turbulence by angle of arrival and scintillation", OPTICS COMMUNICATIONS, NORTH-HOLLAND PUBLISHING CO. AMSTERDAM, NL, vol. 216, no. 1-3, 1 février 2003 (2003-02-01), pages 19-23, XP004404778, ISSN: 0030-4018, DOI: 10.1016/S0030-4018(02)02294-0 cité dans la demande**
- **YU VENEDIKTOV V ET AL: "Liquid crystals in dynamic holography (review)", OPTICS AND SPECTROSCOPY, NAUKA/INTERPERIODICA, MO, vol. 111, no. 1, 28 juillet 2011 (2011-07-28), pages 113-133, XP019931375, ISSN: 1562-6911, DOI: 10.1134/S0030400X11070216**
- **FROMM D C ET AL: "The cataphoretic He-Cd laser properties, construction, and application in holography", OPTICS AND LASER TECHNOLOGY, ELSEVIER SCIENCE PUBLISHERS BV., AMSTERDAM, NL, vol. 8, no. 2, 1 avril 1976 (1976-04-01), pages 68-70, XP024449093, ISSN: 0030-3992, DOI: 10.1016/0030-3992(76)90065-7 [extrait le 1976-04-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

Le domaine de l'invention est celui des procédés permettant de déceler les turbulences d'un milieu, exploitant les perturbations générées sur la propagation d'un faisceau laser et celui des dispositifs compacts mettant en oeuvre un tel procédé.

Ce type de procédé peut aussi bien être exploité pour mesurer des taux de turbulence (plus ou moins forte dans un environnement donné) que pour mesurer les effets de turbulence sur la propagation d'un faisceau laser.

En effet, l'analyse de turbulence peut trouver de nombreuses applications, via des moyens compacts et discrets, notamment dans le domaine de l'environnement, de détection d'élévations de températures, de mouvements d'air dans une ville par exemple.

Il peut également être très intéressant de mesurer les modifications engendrées sur la propagation d'un faisceau laser en raison de turbulences ambiantes. La propagation de faisceaux laser à travers un milieu turbulent est notamment d'une grande importance dans des applications telles que les communications optiques en espace libre (mer, champ de bataille, ...), la détection de cibles, l'imagerie et la détection à longue distance. Dans beaucoup de ces applications, les lasers avec leurs propriétés de cohérence du champ électromagnétique sont utilisés.

Les champs cohérents qui se propagent dans des milieux aléatoires tels que la turbulence atmosphérique, sont sujets à des distorsions et scintillations spatiales et temporelles aléatoires des intensités optiques qui peuvent entraîner une dégradation considérable dans la performance du système. Ces scintillations dues à des changements rapides et continus de températures et de pression proches de la surface du sol y sont plus sévères et plus prononcées et induisent des distorsions de la structure de phase du champ d'onde par la turbulence entraînant l'onde à interférer avec elle-même.

Ces changements dans les données et paramètres du faisceau apportent des limitations fondamentales dans le développement des systèmes optiques de communication en espace libre. Un des effets significatifs de la turbulence atmosphérique est la fluctuation de la direction de la propagation du front d'onde référencé comme la fluctuation de l'angle d'arrivée ou le tilt du front d'onde. Cet angle est mesuré par différentes méthodes.

Une des méthodes consiste à faire simultanément des mesures différentielles des angles d'arrivée et des fluctuations d'intensité du faisceau laser à partir d'une référence en utilisant une caméra CCD puisque les mesures de fluctuations spatiales sont très sensibles à la longueur d'onde du trajet parcouru par le faisceau laser (A. Consortini et al., Optics Communications, 216, 19-23, (2003)). Cette fluctuation dépend cubiquement de la longueur du trajet optique parcouru.

D'autres méthodes consistent à utiliser une structuration du faisceau laser soit avec des franges d'interférence et en analysant leur visibilité dans le cas d'un type d'anémométrie laser Doppler (H. J. Pjeider et al., J. Opt. Soc. Am., Vol. 70(2), 167-170, (1980)) ou bien en utilisant le déplacement des franges de Moiré (S. Rasouli et al., Opt. Lett., 31 (22), 3276-3278, (2006)) résultant de la superposition avec le même pas, d'une image de franges de référence et d'une image de franges résultant de la turbulence. Les structures de Moiré donnent les fluctuations de l'angle d'arrivée.

Dans les deux cas les méthodes sont difficiles à mettre en oeuvre puisqu'il faut créer les interférences pour l'anémométrie doppler ou bien installer deux réseaux d'amplitude et s'assurer de leur stabilité initiale pour la technique Moiré. Le tilt du front d'onde est lui analysé en utilisant des techniques polynomiales à partir d'une méthode d'analyse de type shark-hartmann (A. V. Sergryev et al., Appl. Opt., 50(20), 3519-3528, (2011)) et nécessite un système d'analyse du front d'onde du laser complexe et coûteux. Les fluctuations de l'angle d'arrivée ou le tilt du front d'onde sont utilisées pour mesurer les paramètres caractéristiques de la turbulence atmosphérique. Le paramètre de structure de l'indice de réfraction ou $C_n^2$ est une mesure de la force de la turbulence optique le long du trajet de propagation du faisceau laser. Dans la propagation laser en espace libre la mesure des fluctuations de l'angle d'arrivée est une étape de base dans l'étude de la turbulence atmosphérique.

Dans ce contexte, la présente demande a pour objet un procédé facile de mise en oeuvre, ouvrant la voie à des dispositifs d'évaluation de la turbulence d'un milieu, pouvant notamment être lié à des phénomènes d'échauffement de l'air ambiant, faciles de mise en oeuvre et pouvant être déployés massivement.

Plus précisément, la présente invention a pour objet un procédé d'évaluation de paramètres de turbulence d'un milieu caractérisé en ce qu'il comprend les étapes suivantes :

- l'illumination par un faisceau laser se propageant dans ledit milieu, d'un film de matériau organique photochromique pouvant comprendre des molécules d'azobenzène, ou de spyropyrane, ou de stylbène, ou de coumarine, ou de fulgide, ladite illumination créant un réseau de surface dans ledit film comportant des striures dont les déformations sont fonction des paramètres de turbulence ;
- une étape d'acquisition d'images comportant des zones élémentaires de structurations liées auxdites striures, plus ou moins réduites et représentatives des paramètres de turbulence dudit milieu ;
- une étape de traitement desdites images permettant d'évaluer les paramètres de turbulence dudit milieu.

Selon une variante de l'invention, le procédé comprend une étape d'acquisition d'images de diffraction du faisceau laser par le réseau de surface créé, lesdites images présentant des spots de diffraction dont les caractéristiques sont dépendantes des paramètres de turbulence.

Selon une variante de l'invention, l'étape de traitement desdites images comprend :

- une opération de transformée de Radon desdites images de manière à générer des images dérivées par calcul d'images dans un repère en rotation générant depuis des zones de diffraction appartenant auxdites images, un ensemble de pics appartenant aux images dérivées,
- une comparaison dudit ensemble de pics avec un ensemble de pics de référence de conditions de turbulence, de manière à estimer le niveau de turbulence dudit milieu.

Selon une variante de l'invention, le procédé comprend :

- une étape d'acquisition d'images réalisée par microscopie AFM ;
- une étape de traitement desdites images permettant de reconnaître, quantifier et analyser les zones élémentaires formées en surface dépendantes, des paramètres de turbulence et permettant d'obtenir des images dérivées ;
- une étape d'analyse desdites images dérivées par analyse fractale ou multifractale, sur l'ensemble desdites zones élémentaires permettant de définir des propriétés d'invariance d'échelle et de déterminer les informations de turbulence dudit milieu.

Selon une variante de l'invention, l'étape de traitement desdites images comprend les opérations suivantes :

- l'utilisation d'un filtre gaussien, moyennant chacun des points d'acquisition avec des points voisins et générant des images filtrées;
- la construction d'un ensemble d'images dérivées par traitement desdites images filtrées, pouvant être opérée par la transformation desdites images filtrées en images filtrées binaires, puis marquage des zones exemptes de striures, de manière à augmenter le contraste entre lesdites zones élémentaires.

Selon une variante de l'invention, l'étape d'analyse fractale ou multifractale comprend les étapes suivantes :

- la division de ladite image selon deux dimensions x et y, en segments N/s, définissant une partition en boîtes, N étant une dimension de l'image et le calcul de deux sommes cumulatives X(i) et Y(i) définissant un signal, telles que :

$$X(i) = \sum_{k=1}^{i} x_k - < x > \text{ et } Y(i) = \sum_{k=1}^{i} y_k - < y >$$

  avec <x> et <y> correspondant aux moyennes du signal en x et y ;
- l'estimation dans chacune des boîtes, d'une surface définie par deux fonctions polynômiales ($p_v(i)$, $q_v(i)$) selon les deux dimensions x et y, permettant d'approximer ledit signal et permettant de définir :

  o une tendance dans chacune des boîtes et
  o les variations par rapport à ladite tendance de manière à définir les paramètres $X_s(i) = X(i) - p_v(i)$ et $Y_s(i) = Y(i) - q_v(i)$

- le calcul d'une fonction de fluctuation dépouillée desdites tendances définie par l'équation :

$$F_q(s) = \sqrt[q]{\frac{1}{N}\sum_{i=1}^{N_s}(|X_s(i)||Y_s(i)|)^q}$$

  avec q entier non nul et où :

$$\sum_{i=1}^{N_s} \left(|X_s(i)||Y_s(i)|\right)^q \approx s^{\tau(q)}$$

permettant de définir :

o une loi de puissance entre la fonction *Fq(s)* et la taille (s) des boîtes et
o l'exposant d'échelle multifractale r(q) et $\tau$ (q) = $q_h$(q) - 1;

- la détermination d'une fonction de singularité $\alpha$(q) = d$\tau$(q) /dq et d'un spectre multifractal : f($\alpha$) = q($\alpha$).$\alpha$ - s[q($\alpha$)] présentant une valeur maximale $f(\alpha)_{max}$ ;
- la comparaison de la valeur $f(\alpha)_{max}$ avec une table de calibration référençant des valeurs $f(\alpha)_{max\ St}$ avec des indices de réfraction Cn et permettant de relier l'indice de réfraction Cn avec un paramètre de turbulence de référence.

L'invention a aussi pour objet un dispositif d'évaluation des paramètres de turbulence d'un milieu, caractérisé en ce qu'il comprend :

- une unité de mesure comportant :

  o un film de matériau organique photochromique pouvant comprendre des molécules d'azobenzène, ou de spyropyrane, ou de stylbène, ou de coumarine, ou de fulgide ;
  o une source laser émettant un faisceau laser se propageant dans ledit milieu et interagissant avec ledit film de manière à créer un réseau de surface comportant des striures dont les déformations sont fonction des paramètres de turbulence ;
  o un détecteur permettant l'acquisition d'images comportant des zones élémentaires de structurations liées auxdites striures, plus ou moins réduites et représentatives des paramètres de turbulence dudit milieu et générant des signaux relatifs auxdites images ;

- un dispositif de réception et de traitement desdits signaux délivrant des informations d'évaluation des paramètres de turbulence dudit milieu.

Selon une variante de l'invention, le dispositif d'évaluation des paramètres de turbulence d'un milieu comprend un ensemble d'unités de mesure, lesdites unités de mesure étant en liaison avec ledit dispositif de réception et de traitement.
L'invention a encore pour objet l'utilisation du dispositif d'évaluation des paramètres de turbulence d'un milieu ambiant selon l'une d'invention, pour réaliser des mesures de mouvements d'air, par exemple en milieu urbain.
L'invention sera mieux comprise et d'autres avantages apparaîtront à la lecture de la description qui va suivre donnée à titre non limitatif et grâce aux figures annexées parmi lesquelles :

- la figure 1 illustre un exemple de dispositif permettant de valider le concept de la présente invention ;
- les figures 2a et 2b illustrent des réseaux inscrits dans un film de matériau photochrome et les différentes images correspondantes de diffraction prises par une caméra CCD ;
- la figure 3 illustre le principe de la transformée de Radon d'une image d'un réseau de diffraction inscrit dans un film de matériau photochromique ;
- les figures 4a et 4b illustrent les images résultantes de la transformée de Radon de deux exemples d'images illustrées en figure 2a ;
- les figures 5a et 5b illustrent les pics d'intensité issus du traitement des images illustrées en figure 4a et 4b et représentatifs du degré de turbulence du milieu analysé ;
- les figures 6a, 6b et 6c illustrent respectivement des images prises par microscopie AFM d'un réseau de surface inscrit dans un film de matériau photochromique, les mêmes images filtrées présentant des zones définies par des contours, puis les mêmes images comportant ces zones, après marquage des intérieurs desdites zones.
- la figure 7 illustre l'évolution de l'exposant de multifractalité en fonction du paramètre q pour différentes conditions de turbulence ;
- la figure 8 illustre le spectre de multifractalité f($\alpha$) appelé spectre de singularités pour différentes conditions de turbulence ;
- la figure 9 illustre l'évolution des positions maximales $f(\alpha)_{max}$ en fonction d'indice de réfraction Cn ;
- la figure 10 illustre l'évolution de la fonction de lacunarité pour différentes conditions de turbulence ;

- la figure 11 illustre un premier exemple de dispositif utilisant le procédé de l'invention ;
- la figure 12 illustre un second exemple de dispositif utilisant le procédé de l'invention.

L'invention va être décrite dans le cadre d'un film d'azobenzène, mais peut tout aussi bien utiliser d'autres types de matériaux organiques photochromiques. L'effet utilisé dans la présente invention, correspond à un enregistrement holographique dans lequel les franges se construisent d'elles-mêmes durant le processus d'auto-organisation moléculaire et impriment une moyenne statistique sur le long terme de l'effet du milieu turbulent sur la propagation laser. Les matériaux holographiques organiques ont l'avantage par rapport à leurs équivalents inorganiques d'être structurellement polyvalents, facilement fabricables et peu coûteux.

Ce type de matériau photochromique, tel un matériau azopolymère, est capable de s'auto-organiser en surface sous l'effet de la lumière d'un laser pour produire une structuration sous forme d'un réseau de diffraction, permettant de mesurer simultanément plusieurs caractéristiques de ladite turbulence.

Les molécules d'azobenzène sont étudiées depuis plus d'un demi-siècle pour leurs propriétés optiques particulières et, encore de nos jours, des phénomènes nouveaux liés à leur photoisomérisation sont découverts. Parmi ces phénomènes, la déformation de matière photo-induite dans les matériaux photochromiques contenant ces molécules est sans doute l'un des plus remarquables. Des cycles successifs d'isomérisation de la molécule, peut résulter un déplacement de matière, sur des distances de plusieurs centaines de nanomètres. Les molécules de la famille des azobenzènes sont caractérisées par deux cycles benzéniques liés par une double liaison entre deux atomes d'azote. Elles peuvent exister sous deux formes isomères : la forme trans (ou E) et la forme cis (ou Z). La transition de la forme trans vers la forme cis est excitée par absorption d'un photon et la transition inverse de la forme cis vers la forme trans peut être soit excitée optiquement soit activée thermiquement.

Il a par ailleurs été montré que les molécules azo du matériau photoisomérisent en répétant des isomérisations *trans-cis-trans* induites par l'absorption de la lumière, de l'orientation moléculaire consécutive se faisant perpendiculairement à la direction de la polarisation de la lumière.

Cet effet peut être observé sur un film mince en polymère contenant des azobenzènes capables de fabriquer un réseau topographique sur la surface du film après exposition par une structure d'interférences créée par deux faisceaux laser.

Cependant le Demandeur est parti du principe que cette structuration en surface peut se réaliser aussi avec un seul faisceau laser par auto-organisation des molécules azo où la direction du vecteur d'onde du réseau dépend de la polarisation du faisceau laser.

Les réseaux de surface peuvent ensuite être effacés par utilisation d'un faisceau laser avec une polarisation circulaire ou par traitement thermique.

Le Demandeur a validé le concept de la présente invention en réalisant des conditions de turbulences en milieu ambiant et en enregistrant les images du réseau de surface créé par un faisceau laser après propagation dudit faisceau dans le milieu ambiant perturbé par les turbulences créées, et ce afin de mettre en évidence la corrélation entre les turbulences et les modifications de structurations réalisées au niveau de la surface du film de matériau organique photochromique.

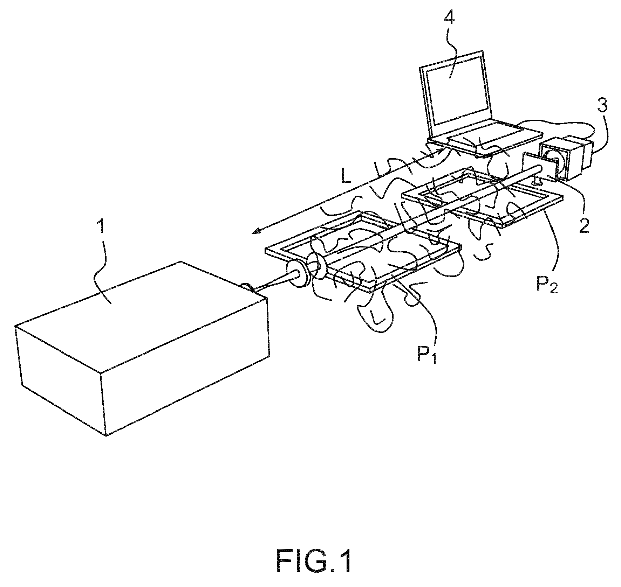

Les paramètres du milieu turbulent nécessaire à l'évaluation de la présente invention ont d'abord été évalués. La turbulence produite est représentative d'une turbulence atmosphérique en conditions réelles. Le montage expérimental illustré en figure 1, consiste en un faisceau laser d'un laser 1, (solide pompé par diode) à $\lambda$ = 473 nm avec une puissance de 5 mW se propageant au travers d'un milieu turbulent de longueur L = 1 m produit par au moins une plaque chauffante électrique (deux plaques $P_1$ et $P_2$ sont représentées en figure 1) à la température de 98 ° C et générant un flux d'air chaud à la température de 42°C.

Le flux d'air généré présente des vitesses v modifiées par une grille ayant des pas de largeurs différentes, lesdites vitesses étant comprises entre 12.5 m/s et 7.6 m/s.

Les intensités et les angles d'arrivée du faisceau $F_1$ ont été évalués en deux étapes successives.

On utilise pour cela une caméra CCD 3, pour mesurer l'intensité totale de la distribution de lumière détectée et les coordonnées x et y du centre du faisceau, après passage en transmission du film de matériau photochromique 2. La surface du détecteur est de 8.4 mm x 6.2 mm. Les images peuvent être enregistrées et traitées via une unité 4.

1) Les angles d'arrivée sont obtenus en mesurant les déplacements latéraux du faisceau sur la caméra par comparaison avec un faisceau de référence sans turbulence. Les angles sont comptés entre un diaphragme et une position du faisceau sur la caméra. La distance entre le diaphragme et la caméra est une zone de propagation non turbulente et est suffisante pour une bonne résolution de la mesure de déplacement.

Les valeurs des angles d'arrivée sont données par :

$$\alpha_x = \delta x/d \text{ et } \alpha_y = \delta y/d.$$

Le Demandeur a mesuré l'angle d'arrivée pour différentes conditions de turbulence.
On se place dans la limite d'approximation de l'optique géométrique pour L « $l_o^2/\lambda$ où $l_o$ est l'échelle intérieure de la turbulence et $\lambda$ la longueur d'onde du faisceau laser.
La valeur efficace des fluctuations de l'angle d'arrivée est donnée par :

$$< \alpha_x{}^2 > = < \alpha_y{}^2 > = 3.28.C_n{}^2 L l_o{}^{-\frac{1}{3}}$$

où $C_n$ est la constante de l'indice de réfraction du milieu (L. C. Andrews, 'Field guide to Atmospheric Optics', SPIE press book, (2004)).
2) Les fluctuations d'intensité du faisceau sont mesurées au cours du temps avec une photodiode et sont définies par :

$$\sigma_I{}^2 = \frac{< I^2 > - < I >^2}{< I >^2} = 12.8 C_n{}^2 L^3 \ell_o{}^{-\frac{7}{3}} \qquad = 1.23 C_n{}^2 k^{\frac{7}{6}} L^{11/6}$$

où L est le trajet du faisceau laser. On peut donc calculer l'échelle intérieure de la turbulence par :

$$\ell_o = 1.97 \sqrt{\frac{< \alpha_x{}^2 >}{\sigma_I{}^2}}$$

Les échantillons des films en polymère sont faits à partir d'une synthèse d'un nouveau monomère chromophorique dérivé d'azobenzène contenant des composés sulfonamide hétérocyclique. Le monomère de type methacrylate contient des espaceurs aliphatiques de différentes longueurs entre les groupes méthacrycliques et chromophoriques. Les monomères en question sont polymérisés pour obtenir des homopolymères et copolymérisés avec du 2-methylacrylate et du 2-ethylhexyl acrylate pour obtenir des copolymères contenant plusieurs pourcentages d'unités chromophoriques.

Les films minces sont préparés par dépôt à la tournette à partir d'une solution diluée avec du THF et une concentration de 50 mg/ml. L'épaisseur du film mesurée avec un profileur dektak-6M est de 1 $\mu$m.

L'absorbance maximale à $\lambda$ = 488 nm est de 1.9. L'absorbance à la longueur d'onde d'expérience $\lambda$ = 476 nm est de 1.6.

Le faisceau laser est d'abord rendu parallèle par un système afocal de deux lentilles (Kepler). Le diamètre du faisceau est de 5.1 mm. Un diaphragme permet de choisir la région centrale du front d'onde et de générer une onde quasi-plane de diamètre 3.1 mm. Le diamètre du diaphragme est choisi pour sélectionner une région du faisceau laser comme le meilleur compromis entre une région du front d'onde plane et un signal d'intensité permettant une valeur raisonnable du ratio signal sur bruit.

Le faisceau laser passe dans le milieu turbulent sur une distance de 1 m et est envoyé sur le film mince d'azopolymère 2, de la présente invention avec une puissance entre 100 et 300 mW/cm$^2$.

Un système optique permet de collecter l'intensité de l'ordre de diffraction et de contrôler dans le temps le déroulement de l'inscription holographique. Lorsque l'intensité de diffraction arrive à saturation, le faisceau laser est coupé et la surface du film mince sur lequel le processus est inscrit est caractérisé par imagerie, plusieurs types d'imagerie pouvant être employés.

Les expériences ont été menées pour quatre exemples de conditions de turbulence croissante T1, T2, T3 et T4, générant des topographies de surface différentes, mais dans lesquelles, la surface s'autoorganise sous l'effet du laser pour créer un réseau de diffraction.

Premier mode d'analyse par analyse semi-fine :

On observe avec une caméra de type CCD, la diffraction de la structure auto-organisée créée en surface et obtenue par le faisceau lui-même. Elle permet de suivre au cours du temps la construction de la structure en surface. Pour un faisceau se propageant sans turbulence le réseau forme un alignement régulier de striures à la surface avec un pas du réseau $\Lambda = 2\lambda/\sin\theta$ où $\theta = 90°$ pour une incidence du faisceau de 90°.

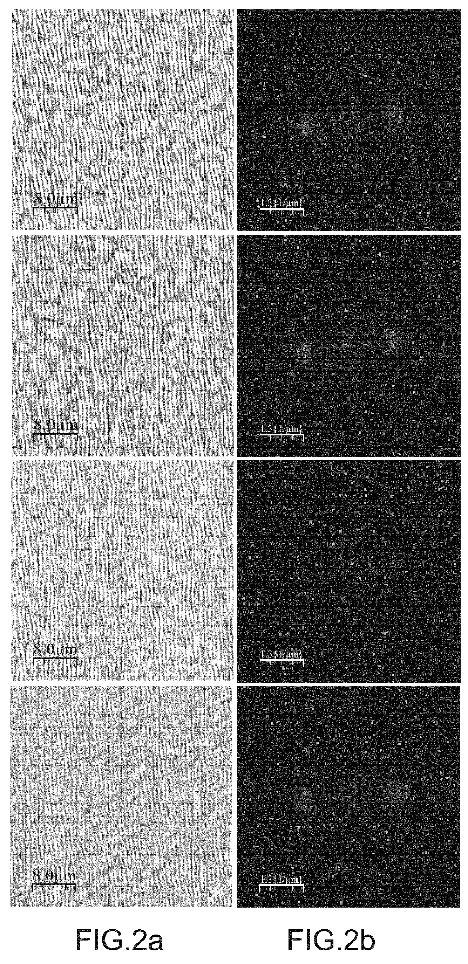

Les figures 2a et 2b sont relatives respectivement aux réseaux inscrits dans le film de matériau photochromique et aux images de diffraction prises par la caméra CCD et comportant des spots donnés par l'ordre de diffraction, pour les quatre conditions de turbulence T1, T2, T3 et T4.

L'écartement des spots donne la fréquence spatiale du réseau auto-organisé présent sur la surface de l'échantillon. L'évolution de cette figure de diffraction suit une loi de puissance dans le temps jusqu'à saturation du phénomène et dépend de la puissance du faisceau laser. Le changement des conditions de propagation du faisceau laser induit des fréquences spatiales additionnelles perturbant la régularité du pas du faisceau. Ces fréquences additionnelles se repèrent par l'apparition d'intensités en dehors des deux spots. L'information spatiale sur la direction des vecteurs d'onde des fréquences spatiales additionnelles est donnée par leurs coordonnées X et Y par rapport aux deux spots et par la surface des intensités. Une surface importante caractérise une diffusion importante des fréquences spatiales et donc une plus grande turbulence.

Avec la modification du milieu de propagation des fréquences additionnelles se créent au centre et en dehors des deux spots correspondant au réseau auto-organisé de référence. Ces fréquences spatiales sont plus basses impliquant une variation de la surface sur de grande distance et correspondent à la création de larges structures. L'apparition de fréquences sur le profil des intensités de diffraction en dehors des deux spots implique la création de sous-réseaux aux fréquences plus grandes que le réseau principal.

La figure 2a montre notamment que la turbulence crée des sous-structures avec des pas des sous-réseaux $\Lambda s$ de $400 \pm 30$ nm.

En monitorant la diffraction créée, on peut suivre l'évolution des sous-réseaux créés ainsi que des zones non-uniformes qui apparaissent.

La variation de polarisation induite par la turbulence est mesurée par la direction horizontale des deux spots de diffraction. Le faisceau laser a une polarisation linéaire et horizontale représentée par les deux spots de diffraction sur un plan horizontal.

Par exemple, la composante linéaire de polarisation change d'un angle $\theta = 7.1$ ° pour l'exemple de la turbulence T4.

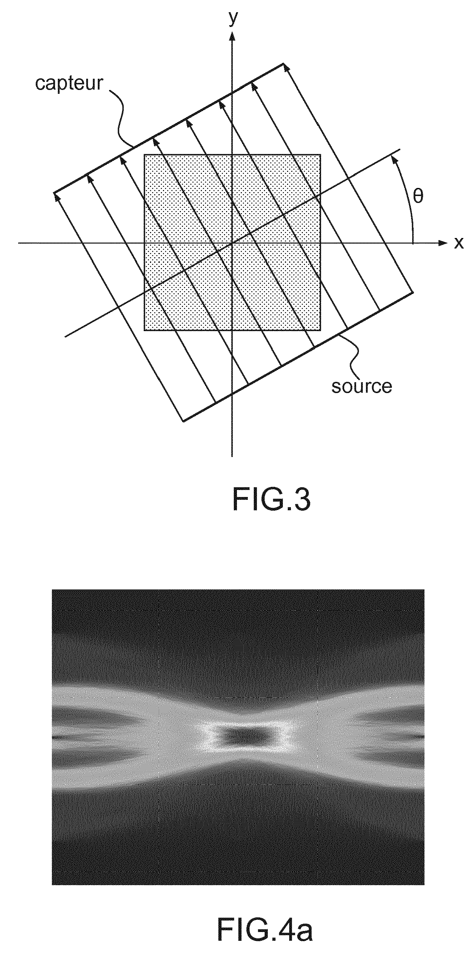

Avantageusement, les images de diffraction peuvent être analysées par la transformée de Radon, le calcul effectif de la transformée de Radon discrète impliquant numériquement des interpolations de l'image à traiter, afin de l'estimer dans un repère en rotation, comme illustré en figure 3.

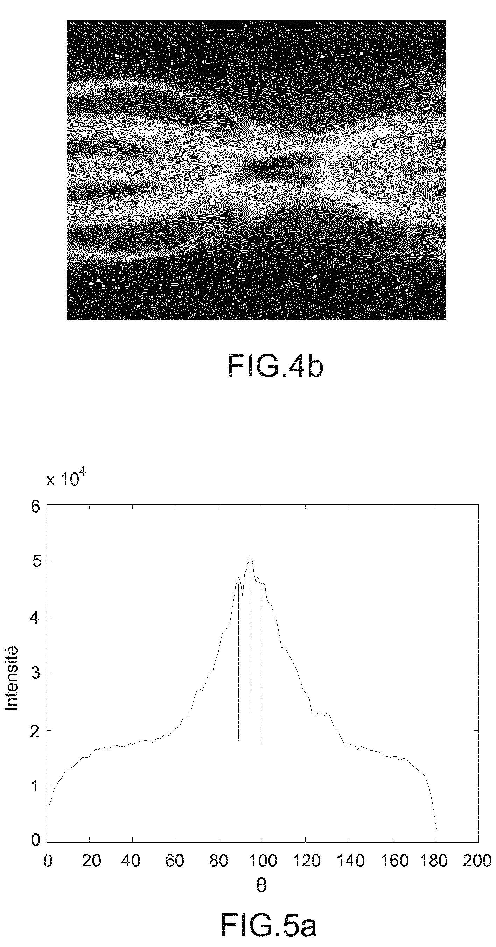

Pour cela, on calcule la projection de l'image le long d'angles donnés. Le résultat est la somme des intensités des pixels dans chaque direction, c'est-à-dire l'intégrale de chacune des lignes. On obtient une nouvelle image $R(\rho,\theta)$ et on fait une coupe pour t = 0°. On obtient par exemple les images dérivées des figures 4a et 4b correspondant à une moyenne turbulence et à une forte turbulence.

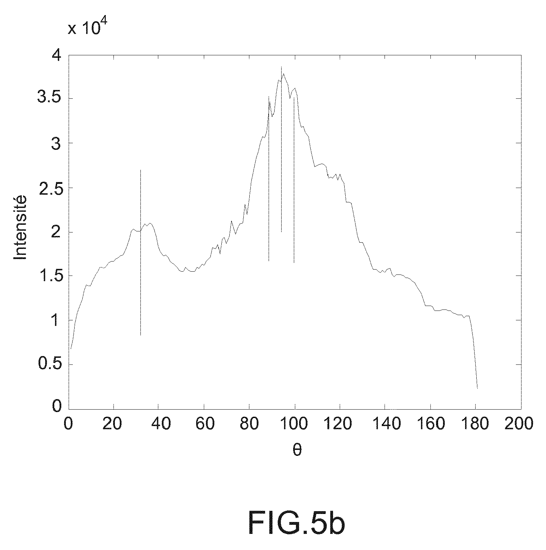

Les représentations de l'intensité en fonction de l'angle $\theta$ telles qu'illustrées en figure 5a et 5b montrent la présence d'un pic central représentant la projection des 2 spots donnés par la diffraction du faisceau sur le réseau sans turbulence. Les pics en dehors du pic central représentent les contributions des fréquences spatiales additionnelles apportées par le mouvement du faisceau laser perturbé par la turbulence. En comparant les pics qui se forment de part et d'autre du pic central on peut qualitativement connaitre instantanément avec la caméra le degré de turbulence induit durant le trajet du faisceau laser

2) Second mode d'analyse fine par imagerie AFM :

2.1 : Etape de traitement d'images :

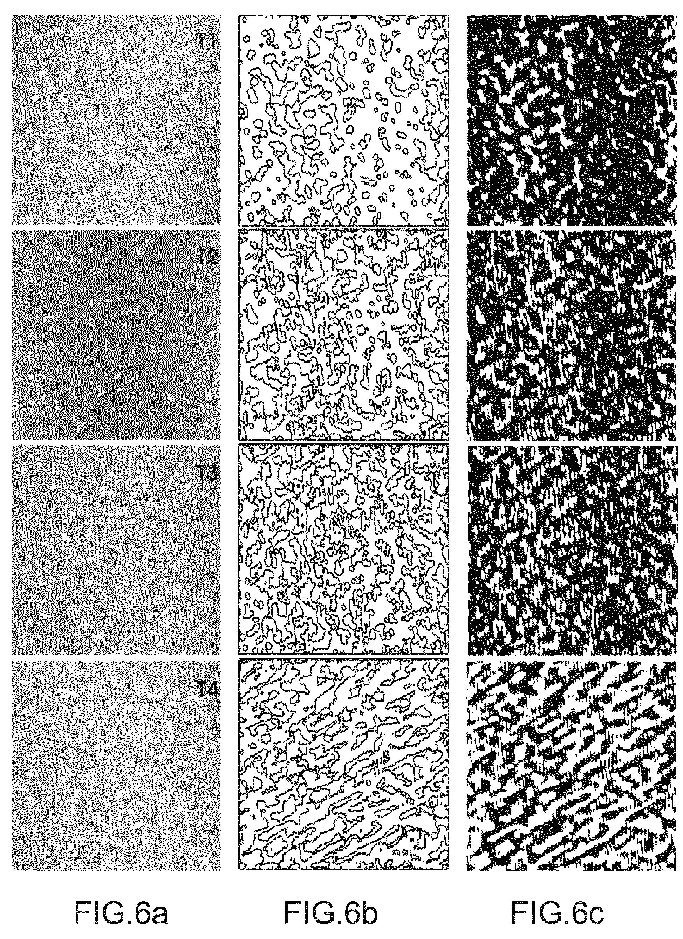

On caractérise le réseau inscrit par microscopie à force atomique en mode contact. La figure 6a donne la topographie de la surface du film après inscription par le laser pour les quatre exemples de conditions de turbulence T1, T2, T3 et T4. La surface s'auto-organise sous l'effet du laser pour créer un réseau de diffraction.

Pour une faible condition de turbulence, la surface présente un réseau auto-organisé dont le pas du réseau $\Lambda = 800 \pm 30$ nm est perturbé par les fluctuations aléatoires de l'angle d'arrivée du faisceau. Le pas du réseau donné par la théorie de la diffraction du second ordre correspond à la condition d'angle du faisceau incident $\Lambda = 2\lambda/ \sin\theta$.

On remarque que certaines zones de la structure en surface ont une structuration réduite. On considère les topographies obtenues pour différentes conditions de turbulence comme des surfaces gaussiennes aléatoires.

Les structurations observées sont d'abord traitées par un algorithme de la présente invention pour reconnaître, quantifier et analyser les sous-zones en surface modifiées par la turbulence.

On applique ensuite des techniques d'analyse fractales et multifractales pour retrouver les propriétés d'invariance d'échelles sur l'ensemble des sous-zones perturbées applicables à la mesure de l'effet de turbulence sur un faisceau laser.

Ces techniques permettent d'avoir une description précise de la complexité des sous-zones désorganisées.

Plus précisément, l'image est en premier lieu intégrée. On utilise pour cela un filtre passe-bas gaussien qui a pour but d'atténuer les hautes fréquences spatiales. Le filtre moyenne chacun des points avec ses voisins. Il a pour effet de supprimer les hautes fréquences et d'augmenter le signal de basse fréquence. Dans le cas présent, le filtre permet de réduire le contraste des zones où il y a absence de réseau et permet de marquer les zones où le réseau a disparu à cause de la perturbation sur le laser qui crée le réseau par la turbulence.

Cette opération revient à dessiner les contours de ces surfaces gaussiennes en seuillant la hauteur de la topographie avec un espacement fixe $\Delta$ entre la hauteur des contours successifs pour obtenir que les sous-zones ne contenant pas de structurations périodiques, comme illustré en figure 6b. Le seuil est déterminé par la valeur empirique $I_{moy}/\sqrt{6}$ où $I_{moy}$ est la valeur moyenne de la rugosité de la surface. Les dessins des contours consistent en lignes non intersectantes fermées dans le plan qui connectent les points d'égales hauteurs. De cette façon, pour chaque configuration de surfaces aléatoires données par les différents milieux turbides, on assigne une configuration d'un ensemble de contours.

Ces contours sont ensuite remplis, comme illustré en figure 6c.

<u>2.2 : Etape de calcul sur les images :</u>

A partir de l'image comportant des zones définis par des contours (tels qu'illustrés en figure 6c), contenant des taches plus ou moins importantes suivant la turbulence, on traite ces images par analyse multifractale. On cherche à mettre en évidence les processus d'auto-similarités dans les images traitées pour avoir les zones dans lesquelles le réseau de surface obtenu par auto-organisation moléculaire a disparu.

2.2.1 : Première étape :

L'image est divisée en boîtes d'égales longueurs s. Dans chacune de ces boîtes de longueur s, une ligne de moindres carrés est utilisée pour ajuster la boîte aux données (représentant la tendance dans la boîte).

Les coordonnées x et y des segments de lignes sont calculés.

Les tendances des fluctuations sont supprimées de l'image en soustrayant la tendance locale.

La valeur efficace des fluctuations de l'image sont alors calculées. Le calcul est répété pour toutes les longueurs des boîtes pour caractériser les fluctuations locales en fonction de la taille des boîtes.

Plus précisément, la première étape consiste à diviser les profils en x et y de l'image en Ns=[N/s] segments disjoints respectivement et calculer la somme cumulative X(i) et Y(i) telle que :

$$X(i) = \sum_{k=1}^{i} x_k - < x > \text{ et } Y(i) = \sum_{k=1}^{i} y_k - < y >.$$

Dans chaque segment de dimension s, on approxime (« fit ») les séries du signal intégré en utilisant une fonction polynomiale $p_v(i)$ pour $\{x_i\}$ et $q_v(i)$ pour $\{y_i\}$.

2.2.2 : Seconde étape

On calcule la fonction de fluctuation dépouillée des tendances en soustrayant la tendance locale dans chaque boîte et on calcule la fluctuation du moment de la racine $q^{ième}$ :

$$F_q(s) = \sqrt[q]{\frac{1}{N}\sum_{i=1}^{N_s}(|X_s(i)||Y_s(i)|)^q}$$

où :

$$\sum_{i=1}^{N_s}(|X_s(i)||Y_s(i)|)^q \approx s^{\tau(q)}$$

avec $X_s(i) = X(i) - p_v(i)$, $Y_s(i) = Y(i) - q_v(i)$ et q entier non nul.

2.2.3 : Troisième étape :

Une relation de loi de puissance entre la fonction $F_q(s)$ et la taille de la boîte s indique la présence d'échelle. On obtient de cette manière les exposants de Hurst généralisés : $\tau$ (q). Ils sont liés aux différents niveaux d'amplification des petites fluctuations dans les données.

La dépendance de $\tau$ (q) est une fonction monotone décroissance de q pour un signal stationnaire et reflète de façon simple le fait que les faibles fluctuations surviennent plus souvent dans le signal que les plus grosses.

$$\text{avec} \quad \tau(q) = qh(q) - 1$$

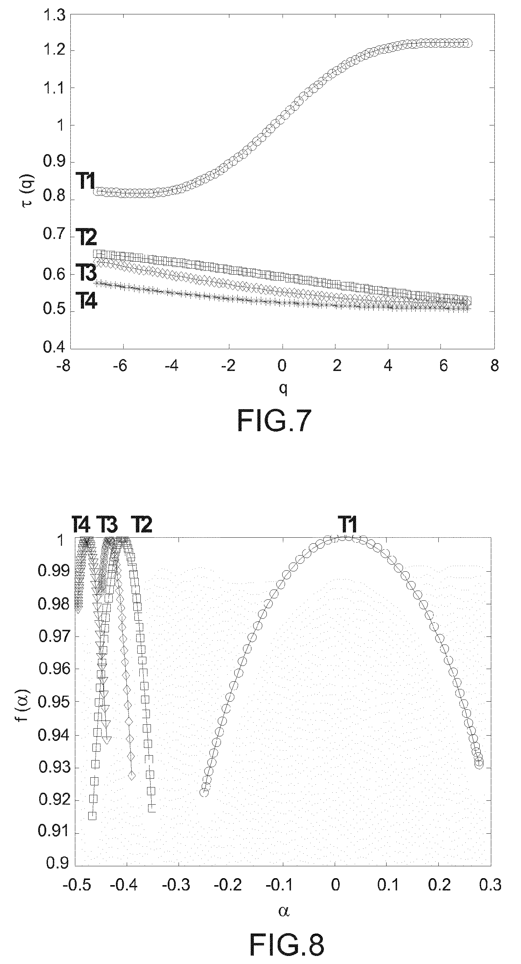

La figure 7 illustre l'évolution du coefficient $\tau$ (q) en fonction du nombre q pour les différentes turbulences T1, T2, T3 et T4. Les courbes qui ne sont pas linéaires reflètent un comportement mutltifractal.

Pour les variations positives de q, h(q) décrit le comportement d'échelle des boîtes avec de larges fluctuations.

Pour une forte turbulence la présente invention permet de constater un exposant d'échelle important pour les larges fluctuations. Au contraire pour les valeurs de q négatives, h(q) décrit le comportement d'échelle des segments avec de petites fluctuations.

On voit que la turbulence T1 induit peu de comportement d'échelle pour les faibles fluctuations. La tendance est inversée pour les autres conditions de turbulence.

On remarque qu'en réduisant la turbulence (turbulence T4), le signal devient de plus en plus monofractal.

2.2.4. Quatrième étape :

On peut utiliser la fonction des singularités obtenue par une transformée de Legendre :

$$\alpha(q) = d\tau(q)/dq$$

On peut aussi utiliser un spectre de multifractalité :

$$f(\alpha) = q(\alpha)\alpha - s(q(\alpha))$$

Cette dernière approche donne une représentation utile de la multifractalité.

La largeur des spectres $f(\alpha)$ mesure le niveau de multifractalité du signal. Plus la largeur est importante plus le signal est multifractal. La figure 8 illustre ces spectres pour les différentes turbulences T1, T2, T3 et T4.

Le maximum de la fonction $f(\alpha)$ en fonction de $\alpha$ est tracé en figure 8. On note deux zones d'évolution linéaire du maximum en fonction de la force de la turbulence.

La valeur de $C_n$ peut être évaluée en fonction du maximum de $f(\alpha)$.

La largeur de $f(\alpha)$ à f = 0.9, caractérise le nombre de singularités multifractales c'est-à-dire que le signal a de multiples lois d'échelles et est fortement perturbé. Les largeurs sont très différentes en fonction de la turbulence et permettent de voir qu'avec une turbulence élevée le signal contient plus de fluctuations multifractales.

Cette dernière mesure caractérise l'évolution des sous-structures en surface de l'azopolymère qui deviennent moins régulière avec l'augmentation de la turbulence. La valeur de $f(\alpha)$ est liée à $C_n$ par la relation

maxHdff = $-0.8.C_n + 0.8$ pour une faible turbulence et
maxHdff = $-0.23 .C_n + 0.26$ pour une forte turbulence.
avec $f(\alpha)_{max}$ = maxHdff.

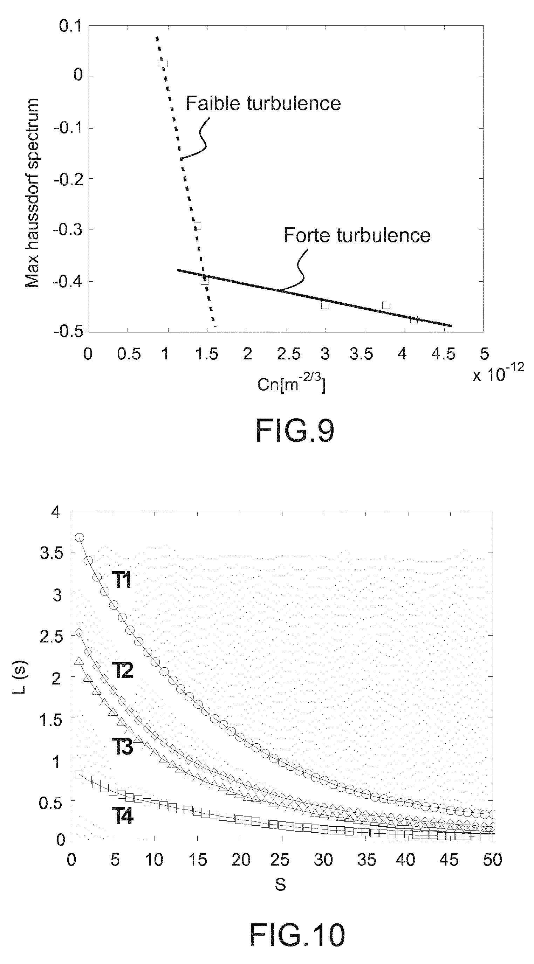

La figure 9 illustre ainsi le cas d'une faible turbulence et le cas d'une forte turbulence.

Le procédé de la présente invention permet également de calculer la lacunarité qui évalue l'homogénéité de la répartition des intensités lumineuses et donc de savoir comment l'objet rempli l'espace.

L'étude de la lacunarité permet de mesurer la distribution de trous dans l'image : si celle- ci comporte de grands contrastes (à l'échelle), alors la lacunarité de l'image sera élevée. A l'inverse, si l'image est homogène, alors sa lacunarité sera faible.

La lacunarité est mesurée en utilisant un algorithme de boîte glissante.

L'algorithme utilise une boîte de taille s x s avec s sa largeur placée au coin supérieur gauche de l'image. Le nombre de pixels du signal dans la boîte est compté.

La boîte est glissée d'un pixel sur la droite et le nombre de pixels dans la boîte est compté ainsi de suite. Le processus est répété jusqu'à ce que la boîte atteigne le coin inférieur droit de l'image.

Si $\lambda$ est la taille de l'image le nombre de boîtes de largeur s est

$N(s) = (\lambda\text{-}s\text{+}l)^2$. La largeur s de la boîte est choisie de telle sorte que la valeur numérique est égale à 2, 4, 8, ..., /.

Pour chaque boîte de largeur s, les deux quantités suivantes sont mesurées : la somme du nombre de pixels du signal dans chaque boîte

$Q_{1 = \sum i}$ p (i, s) et la somme quadratique $Q_{1 = \sum i}$ p (i, s) $^2$

La lacunarité L(s) pour une taille de boîte est définie par :

$N(s).\ Q_2/Q_1^2$

p(i, $\lambda$) est le nombre de pixels du signal dans la $i^{ieme}$ boîte et i est compris entre 1 et N(s).

La fonction de lacunarité est évaluée à partir des mesures de la figure 10 approximée (« fitée ») avec une fonction hyperbolique :

$$L(s)= b/s^a + c,$$ où b est relatif à la concavité de l'hyperbole.

Une faible valeur de b donne une hyperbole avec une large concavité (forte concavité). Une faible valeur de b décrit un objet avec une forte distribution d'interstices vides.

La figure 10 montre le calcul des lacunarités calculées à partir des images contrastées où les contours correspondant au seuil des images contar (figure 6c). Le calcul montre les différentes texturations des images pour différentes conditions de turbulence. Les valeurs obtenues sur les exemples de structurations montrés à la figure 6a donne pour la valeur du coefficient de la parabole b en fonction de $C_n$ :

| b | Cn |
|---|---|
| 2.61 | $9.4110^{-13}$ |
| 8.62 | $1.47.10^{-12}$ |
| 10.94 | $3.77.10^{-12}$ |
| 19.11 | $4.12.10^{-12}$ |

La courbure de l'hyperbole devient de plus en plus forte au fur et à mesure que la turbulence diminue impliquant un plus grand espace entre les zones foncées des images de la figure 6c. Avec la turbulence, le faisceau fluctue spatialement et perd sa cohérence réduisant les zones structurées sur le film d'azopolymère. Ces zones non structurées représentent l'intégration dans le temps de toutes les fluctuations spatiales.

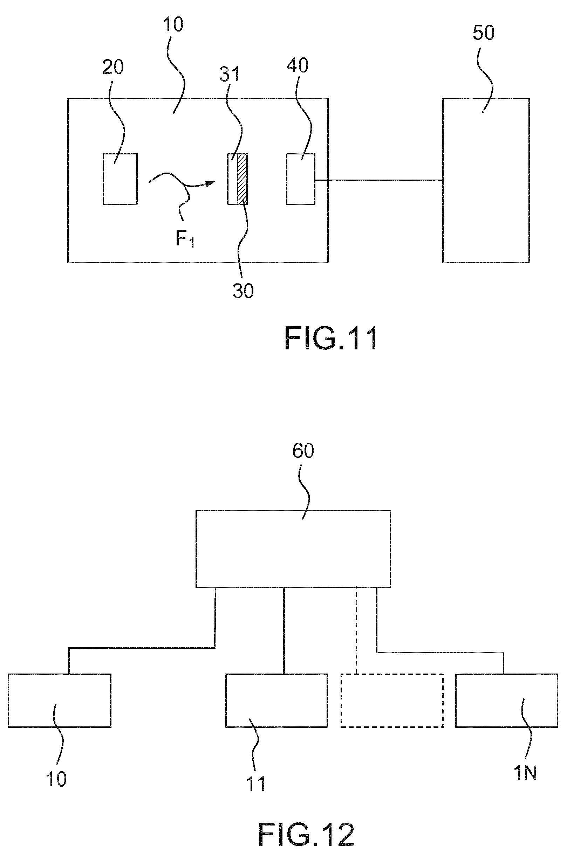

Selon un premier exemple de dispositif représenté en figure 11, le procédé de la présente invention peut être implémenté dans une unité 10 comprenant une source laser 20, un support 30 recouvert d'un film de matériau photochromique 31 et une détecteur de type caméra CCD, 40. Cette unité est reliée à un dispositif de traitement 50.

Selon un second exemple de l'invention, le dispositif peut comprendre un ensemble d'unités 10, 11,..., 1 N reliées à un dispositif de traitement central 60 et permettant de collecter différentes informations de turbulences en différents endroits via le centre de traitement 60.

## Revendications

1. Procédé d'évaluation de paramètres de turbulence d'un milieu comprenant les étapes suivantes :

   - l'illumination par un faisceau laser se propageant dans ledit milieu, d'un film de matériau organique photochromique pouvant comprendre des molécules d'azobenzène, ou de spyropyrane, ou de stylbène, ou de coumarine, ou de fulgide, ladite illumination créant un réseau de surface dans ledit film comportant des striures dont les déformations sont fonction des paramètres de turbulence ;
   - une étape d'acquisition d'images comportant des zones élémentaires de structurations liées auxdites striures, plus ou moins réduites et représentatives des paramètres de turbulence dudit milieu ;
   - une étape de traitement desdites images permettant d'évaluer les paramètres de turbulence dudit milieu.

**2.** Procédé d'évaluation de paramètres de turbulence selon la revendication 1, **caractérisé en ce qu'**il comprend une étape d'acquisition d'images de diffraction du faisceau laser par le réseau de surface créé, lesdites images présentant des spots de diffraction dont les caractéristiques sont dépendantes des paramètres de turbulence.

**3.** Procédé d'évaluation de paramètres de turbulence selon la revendication 2, **caractérisé en ce que** l'étape de traitement desdites images comprend :

- une opération de transformée de Radon desdites images de manière à générer des images dérivées par calcul d'images dans un repère en rotation générant depuis des zones de diffraction appartenant auxdites images, un ensemble de pics appartenant aux images dérivées,
- une comparaison dudit ensemble de pics avec un ensemble de pics de référence de conditions de turbulence, de manière à estimer le niveau de turbulence dudit milieu.

**4.** Procédé d'évaluation de paramètres de turbulence selon la revendication 1, **caractérisé en ce qu'**il comprend :

- une étape d'acquisition d'images réalisée par microscopie AFM ;
- une étape de traitement desdites images permettant de reconnaître, quantifier et analyser les zones élémentaires formées en surface dépendantes des paramètres de turbulence et permettant d'obtenir des images dérivées ;
- une étape d'analyse desdites images dérivées par analyse fracale ou multifractale, sur l'ensemble desdites zones élémentaires permettant de définir des propriétés d'invariance d'échelle et de déterminer les informations de turbulence dudit milieu.

**5.** Procédé d'évaluation de paramètres de turbulence selon la revendication 4, **caractérisé en ce que** l'étape de traitement desdites images comprend les opérations suivantes :

- l'utilisation d'un filtre gaussien, moyennant chacun des points d'acquisition aves des points voisins et générant des images filtrées;
- la construction d'un ensemble d'images dérivées par traitement desdites images filtrées, pouvant être opérée par la transformation desdites images filtrées en images filtrées binaires, puis marquage des zones exemptes de striures, de manière à augmenter le contraste entre lesdites zones élémentaires.

**6.** Procédé d'évaluation de paramètres de turbulence selon la revendication 5, **caractérisé en ce que** l'étape d'analyse fractale ou multifractale comprend les étapes suivantes :

- la division de ladite image selon deux dimensions x et y, en segments N/s, définissant une partition en boîtes, N étant une dimension de l'image et le calcul de deux sommes cumulatives X(i) et Y(i) définissant un signal, telles que :

$$X(i) = \sum_{k-1}^{i} x_k - \langle x \rangle \text{ et } Y(i) = \sum_{k=1}^{i} y_k - \langle y \rangle$$

avec <x> et <y> correspondant aux moyennes du signal en x et y.
- l'estimation dans chacune des boîtes, d'une surface définie par deux fonctions polynômiales ($p_v(i)$, $q_v(i)$) selon les deux dimensions, permettant d'approximer ledit signal et permettant de définir une tendance dans chacune des boîtes et les variations par rapport à ladite tendance de manière à définir les paramètres $X_s(i) = X(i) - p_v(i)$ et $Y_s(i) = Y(i) - q_v(i)$ ;
- le calcul d'une fonction de fluctuation dépouillée desdites tendances définie par l'équation :

$$F_q(s) = \sqrt[q]{\frac{1}{N}\sum_{i=1}^{N_s}(|X_s(i)||Y_s(i)|)^q}$$

avec q entier non nul et où :

$$\sum_{i=1}^{N_s}(|X_s(i)||Y_s(i)|)^q \approx s^{\tau(q)}$$

et permettant de définir une loi de puissance entre la fonction *Fq(s)* et la taille (s) des boîtes et de définir l'exposant d'échelle multifractale $\tau(q)$ ;
- la détermination d'une fonction de singularité $\alpha(q) = d\tau(q) /dq$ et d'un spectre multifractal : $f(\alpha) = q(\alpha).\alpha - s[q(\alpha)]$ présentant une valeur maximale $f(\alpha)_{max}$ ;
- la comparaison de la valeur $f(\alpha)_{max}$ avec une table de calibration référençant des valeurs $f(\alpha)_{max\ St}$ avec des indices de réfraction Cn et permettant de relier l'indice de réfraction Cn avec un paramètre de turbulence de référence.

**7.** Dispositif d'évaluation des paramètres de turbulence d'un milieu, comprenant :

- une unité de mesure comportant :

◦ un film de matériau organique photochromique pouvant comprendre des molécules d'azobenzène, ou de spyropyrane, ou de stylbène, ou de coumarine, ou de fulgide ;
o une source laser émettant un faisceau laser se propageant dans ledit milieu et interagissant avec ledit film de manière à créer un réseau de surface comportant des striures dont les déformations sont fonction des paramètres de turbulence ;
o un détecteur permettant l'acquisition d'images comportant des zones élémentaires de structurations liées auxdites striures, plus ou moins réduites et représentatives des paramètres de turbulence dudit milieu et générant des signaux relatifs auxdites images ;

- un dispositif de réception et de traitement desdits signaux délivrant des informations d'évaluation des paramètres de turbulence dudit milieu.

**8.** Dispositif d'évaluation des paramètres de turbulence d'un milieu selon la revendication 7, **caractérisé en ce qu'**il comprend un ensemble d'unités de mesure, lesdites unités de mesure étant en liaison avec ledit dispositif de réception et de traitement.

**9.** Utilisation du dispositif d'évaluation des paramètres de turbulence d'un milieu ambiant selon l'une des revendications 7 ou 8, pour réaliser des mesures de mouvements d'air, par exemple en milieu urbain.

## Patentansprüche

**1.** Verfahren zum Beurteilen von Turbulenzparametern einer Umgebung, das die folgenden Schritte beinhaltet:

- Beleuchten, durch einen sich in der Umgebung ausbreitenden Laserstrahl, einer Folie aus fotochromem organischem Material, das Azobenzol- oder Spyropyran-oder Stilben- oder Coumarin- oder Fulgidmoleküle umfassen kann, wobei die Beleuchtung ein Oberflächennetz in der Folie erzeugt, das Riefen umfasst, deren Verformungen von den Turbulenzparametern abhängig sind;
- einen Schritt des Erfassens von Bildern, die mehr oder weniger verkleinerte, mit den Riefen verbundene Elementarzonen von Strukturen umfassen, die Turbulenzparameter der Umgebung repräsentieren;
- einen Schritt des Verarbeitens der Bilder, so dass die Turbulenzparameter der Umgebung beurteilt werden können.

**2.** Verfahren zum Beurteilen von Turbulenzparametern nach Anspruch 1, **dadurch gekennzeichnet, dass** es einen Schritt des Erfassens von Beugungsbildern des Laserstrahls über das erzeugte Oberflächennetz beinhaltet, wobei die Bilder Beugungspunkte haben, deren Charakteristiken von den Turbulenzparametern abhängig sind.

**3.** Verfahren zum Beurteilen von Turbulenzparametern nach Anspruch 2, **dadurch gekennzeichnet, dass** der Schritt des Verarbeitens der Bilder Folgendes beinhaltet:

- einen Radon-Transformationsvorgang der Bilder, um abgeleitete Bilder durch Berechnen von Bildern in einem Drehreferenzrahmen zu erzeugen, der von zu den Bildern gehörenden Beugungszonen einen Satz von Peaks erzeugt, die zu den abgeleiteten Bildern gehören;
- einen Vergleich des Satzes von Peaks mit einem Satz von Referenzpeaks von Turbulenzbedingungen, um das Turbulenzniveau der Umgebung zu schätzen.

**4.** Verfahren zum Beurteilen von Turbulenzparametern nach Anspruch 1, **dadurch gekennzeichnet, dass** es Folgendes beinhaltet:

- einen Schritt des Erfassens von durch AFM-Mikroskopie realisierten Bildern;
- einen Schritt des Verarbeitens der Bilder, der es zulässt, die an der Oberfläche gebildeten Elementarzonen zu erkennen, zu quantifizieren und zu analysieren, die von den Turbulenzparametern abhängig sind, und abgeleitete Bilder zu erhalten;
- einen Schritt des Analysierens der abgeleiteten Bilder durch Fraktal- oder Multifraktalanalyse an dem Satz der Elementarzonen, so dass Skaleninvarianzeigenschaften definiert und die Turbulenzinformationen der Umgebung bestimmt werden können.

**5.** Verfahren zum Beurteilen von Turbulenzparametern nach Anspruch 4, **dadurch gekennzeichnet, dass** der Schritt des Verarbeitens der Bilder die folgenden Vorgänge beinhaltet:

- Benutzen eines Gaußschen Filters, wobei jeder der Erfassungspunkte mit Nachbarpunkten gemittelt wird, und Erzeugen von filtrierten Bildern;
- Konstruieren eines Satzes von abgeleiteten Bildern durch Verarbeiten der gefilterten Bilder, was durch Transformieren der gefilterten Bilder in binäre gefilterte Bilder erfolgen kann, dann Markieren von riefenfreien Zonen, um den Kontrast zwischen den Elementarzonen zu verstärken.

**6.** Verfahren zum Beurteilen von Turbulenzparametern nach Anspruch 5, **dadurch gekennzeichnet, dass** der Fraktal- oder Multifraktalanalyseschritt die folgenden Schritte beinhaltet:

- Unterteilen des Bildes gemäß zwei Dimensionen x und y in Segmente N/s, um eine Boxpartition zu definieren, wobei N eine Dimension des Bildes ist, und Berechnen von zwei kumulativen Summen X(i) und Y(i) zum Definieren eines Signals, so dass:

$$X(i) = \sum_{k=1}^{i} x_k - \langle x \rangle \text{ und } Y(i) = \sum_{k=1}^{i} y_k - \langle y \rangle$$

wobei <x> und <y> den Mitteln des Signals in x und y entsprechen;
- Schätzen, in jeder der Boxen, einer Oberfläche, die durch zwei polynome Funktionen ($p_v(i)$, $q_v(i)$) in den beiden Dimensionen definiert wird, so dass das Signal approximiert und ein Trend in jeder der Boxen definiert werden kann und die Variationen relativ zu dem Trend definiert werden können, um die folgenden Parameter zu definieren: $X_s(i) = X(i) - p_v(i)$ und $Y_s(i) = Y(i) - q_v(i)$;
- Berechnen einer Fluktuationsfunktion ohne die Trends, definiert durch die Gleichung:

$$F_q(s) = \sqrt[q]{\frac{1}{N} \sum_{i=1}^{N_s} (|X_s(i)||Y_s(i)|)^q}$$

wobei q eine ganze Zahl ungleich null ist und wobei:

$$\sum_{i=1}^{N_s} (|X_s(i)||Y_s(i)|)^q \approx s^{\tau(q)}$$

und die es erlaubt, dass ein Leistungsgesetz zwischen der Funktion $F_q(s)$ und der Größe (s) der Boxen definiert wird und die Multifraktal-Skalenexponente $\tau(q)$ definiert wird;

- Ermitteln einer Singularitätsfunktion $\alpha(q) = d\tau(q)/dq$ und eines Multifraktalspektrums: $f(\alpha) = q(\alpha)$. $\alpha$ - s[q($\alpha$)] mit einem Maximalwert $f(\alpha)_{max}$;
- Vergleichen des Wertes $f(\alpha)_{max}$ mit einer Kalibrationstabelle, die$f(\alpha)_{max\ st}$-Werte mit Beugungsindexen Cn referenziert und die die Verbindung des Beugungsindex Cn mit einem Referenzturbulenzparameter erlaubt.

**7.** Vorrichtung zum Beurteilen von Turbulenzparametern einer Umgebung, die Folgendes umfasst:

- eine Messeinheit, die Folgendes umfasst:

◦ eine Folie aus fotochromem organischem Material, die Azobenzol- oder Spyropyran- oder Stilben- oder Coumarin- oder Fulgid-Moleküle umfassen kann;
◦ eine Laserquelle, die einen Laserstrahl emittiert, der sich in der Umgebung ausbreitet und mit der Folie interagiert, um ein Oberflächennetz zu erzeugen, das Riefen umfasst, deren Verformungen von den Turbulenzparametern abhängig sind;
◦ einen Detektor, der die Erfassung von Bildern erlaubt, die mehr oder weniger verkleinerte, mit den Riefen verbundene Elementarzonen von Strukturen umfassen, die die Turbulenzparameter der Umgebung repräsentieren, und der Signale in Bezug auf die Bilder erzeugt;

- eine Vorrichtung zum Empfangen und Verarbeiten der Signale zum Liefern von Informationen zur Beurteilung von Turbulenzparametern der Umgebung.

**8.** Vorrichtung zum Beurteilen von Turbulenzparametern einer Umgebung gemäß Anspruch 7, **dadurch gekennzeichnet, dass** sie einen Satz von Messeinheiten umfasst, wobei die Messeinheiten mit der Empfangs- und Verarbeitungsvorrichtung verbunden sind.

**9.** Verwendung der Vorrichtung zum Beurteilen von Turbulenzparametern einer Umgebung nach einem der Ansprüche 7 oder 8 zum Durchführen von Messungen von Luftbewegungen beispielsweise in einer Stadtumgebung.

## Claims

**1.** A method for assessing turbulence parameters of an environment comprising the following steps:

- illuminating, by a laser beam propagating inside said environment, a film of photochromic organic material that can comprise azobenzene or spyropyrane or stylbene or coumarin or fulgide molecules, said illumination creating a surface grating in said film that comprises scores, the deformations of which are a function of the turbulence parameters;
- a step of acquiting images comprising more or less reduced elementary areas of structures linked to said scores and representing turbulence parameters of said environment;
- a step of processing said images that allows the turbulence parameters of said environment to be assessed.

**2.** The method for assessing turbulence parameters according to claim 1, **characterised in that** it comprises a step of acquiring diffraction images of the laser beam via the created surface grating, said images having diffraction spots, the characteristics of which are dependent on the turbulence parameters.

**3.** The method for assessing turbulence parameters according to claim 2, **characterised in that** the step of processing said images comprises:

- a Radon transform operation of said images so as to generate derived images by computing images in a rotating reference frame generating, from diffraction areas belonging to said images, a set of peaks belonging to the derived images;
- comparing said set of peaks with a set of reference peaks of turbulence conditions, so as to estimate the level of turbulence of said environment.

**4.** The method for assessing turbulence parameters according to claim 1, **characterised in that** it comprises:

- a step of acquiring images taken by AFM microscopy;
- a step of processing said images that allows the elementary areas formed on the surface and being dependent on the turbulence parameters to be recognised, quantified and analysed, and that allows derived images to be obtained;
- a step of analysing said derived images by fractal or multifractal analysis over all of said elementary areas, allowing scale invariance properties to be defined and the turbulence information of said environment to be determined.

**5.** The method for assessing turbulence parameters according to claim 4, **characterised in that** the step of processing said images comprises the following operations:

- using a Gaussian filter, averaging each of the acquisition points with neighbouring points and generating filtered images;
- constructing a set of derived images by processing said filtered images, which can be carried out by transforming said filtered images into binary filtered images, then marking areas that are devoid of scores, so as to increase the contrast between said elementary areas.

**6.** The method for assessing turbulence parameters according to claim 5, **characterised in that** the step of fractal or multifractal analysis comprises the following steps:

- dividing said image along two dimensions x and y into segments N/s, defining a box partition, with N being a dimension of the image, and computing two cumulative sums X(i) and Y(i) defining a signal, such that:

$$X(i) = \sum_{k=1}^{i} x_k - < x > \text{ and } Y(i) = \sum_{k=1}^{i} y_k - < y >$$

with <x> and <y> corresponding to the averages of the signal at x and y;
- estimating, in each of the boxes, a surface defined by two polynomial functions ($p_v(i)$, $q_v(i)$) in the two dimensions, allowing said signal to be approximated and allowing a trend to be defined in each of the boxes and the variations to be defined relative to said trend, so as to define the following parameters: $X_s(i) = X(i) - p_v(i)$ and $Y_s(i) = Y(i) - q_v(i)$;
- computing a fluctuation function devoid of said trends defined by the following equation:

$$F_q(s) = \sqrt[q]{\frac{1}{N}\sum_{i=1}^{N_s}(|X_s(i)||Y_s(i)|)^q}$$

with q being a non-zero integer and where:

$$\sum_{i=1}^{N_s}(|X_s(i)||Y_s(i)|)^q \approx s^{\tau(q)}$$

and allowing a power law to be defined between the function $F_q(s)$ and the size (s) of the boxes and the multifractal scale exponent $\tau(q)$ to be defined;
- determining a singularity function $\alpha(q) = d\,\tau(q)/dq$ and a multifractal spectrum: $f(\alpha) = q(\alpha).\ \alpha - s[q(\alpha)]$ having a maximum value $f(\alpha)_{max}$;
- comparing the value $f(\alpha)_{max}$ with a calibration table referencing values $f(\alpha)_{max}$ st with refraction indices Cn and allowing the refraction index Cn to be linked to a reference turbulence parameter.

**7.** A device for assessing turbulence parameters of an environment comprising:

- a measurement unit comprising:

  ◦ a film of photochromic organic material that can comprise azobenzene or spyropyrane or stylbene or coumarin or fulgide molecules;
  ◦ a laser source emitting a laser beam propagating inside said environment and interacting with said film so as to create a surface grating comprising scores, the deformations of which are a function of the turbulence parameters;

◦ a detector allowing images to be acquired that comprise more or less reduced elementary areas of structures linked to said scores and representing turbulence parameters of said environment and generating signals relating to said images;

- a device for receiving and processing said signals delivering information for assessing turbulence parameters of said environment.

8. A device for assessing turbulence parameters of an environment according to claim 7, **characterised in that** it comprises a set of measurement units, said measurement units being linked to said receiving and processing device.

9. The use of the device for assessing turbulence parameters of an ambient environment according to any one of claims 7 or 8 for currying out measurements of air movements, in an urban environment, for example.

4
3
L
1
2
$P_2$
$P_1$

FIG.1

8.0µm
8.0µm
8.0µm
8.0µm
1.3{1/µm}
1.3{1/µm}
1.3{1/µm}
1.3{1/µm}

FIG.2a FIG.2b

y
capteur
θ
x
source

FIG.3

FIG.4a

FIG.4b

x 10^4
6
5
4
3
2
1
0
Intensité
0 20 40 60 80 100 120 140 160 180 200
θ

FIG.5a

x 10^4
4
3.5
3
2.5
2
1.5
1
0.5
0
Intensité
0
20
40
60
80
100
120
140
160
180
200
θ

FIG.5b

T1
T2
T3
T4

FIG.6a FIG.6b FIG.6c

τ (q)
q
T1
T2
T3
T4
1.3
1.2
1.1
1
0.9
0.8
0.7
0.6
0.5
0.4
-8
-6
-4
-2
0
2
4
6
8

FIG.7

f (α)
α
T4
T3
T2
T1
1
0.99
0.98
0.97
0.96
0.95
0.94
0.93
0.92
0.91
0.9
-0.5
-0.4
-0.3
-0.2
-0.1
0
0.1
0.2
0.3

FIG.8

Max haussdorf spectrum
Faible turbulence
Forte turbulence
Cn[m-2/3]
x 10-12
0.1
0
-0.1
-0.2
-0.3
-0.4
-0.5
0
0.5
1
1.5
2
2.5
3
3.5
4
4.5
5

FIG.9

L (s)
S
T1
T2
T3
T4
4
3.5
3
2.5
2
1.5
1
0.5
0
0
5
10
15
20
25
30
35
40
45
50

FIG.10

10
50
20
31
40
$F_1$
30

FIG.11

60
10
11
1N

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **A. CONSORTINI et al.** *Optics Communications,* 2003, vol. 216, 19-23
- **H. J. PJEIDER et al.** *J. Opt. Soc. Am.,* 1980, vol. 70 (2), 167-170
- **S. RASOULI et al.** *Opt. Lett.,* 2006, vol. 31 (22), 3276-3278
- **A. V. SERGRYEV et al.** *Appl. Opt.,* 2011, vol. 50 (20), 3519-3528
- **L. C. ANDREWS.** Field guide to Atmospheric Optics. SPIE press book, 2004